**Europäisches Patentamt**

**European Patent Office**

**Office européen des brevets**

(19)

(11) Veröffentlichungsnummer: **0 330 919**

**A1**

(12) **EUROPÄISCHE PATENTANMELDUNG**

(21) Anmeldenummer: **89102659.3**

(22) Anmeldetag: **16.02.89**

(51) Int. Cl.⁴: **A01C 5/06**

(30) Priorität: **25.02.88 DE 3805922**

(43) Veröffentlichungstag der Anmeldung:
**06.09.89 Patentblatt 89/36**

(84) Benannte Vertragsstaaten:
**DE ES IT**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Gattermann, Bernd**
**Eichenwall 3**
**D-2872 Hude 1(DE)**
Erfinder: **Steenken, Bernd**
**Waldhöfe 17**
**D-4475 Sögel 2(DE)**

(54) **Verfahren zum Einbringen von Saatgut in den Boden mittels Säschare.**

(57) Verfahren zum Einbringen von Saatgut in Dämme mit Säscharen, die das Saatgut im Boden ablegen. Um ein Verfahren und eine zur Druchführung des Verfahrens geeignete Drillmaschine zu schaffen, welche in einem Arbeitsgang in Trockengebieten Dämme formen kann, in welche dann das Saatgut abgelegt wird und gleichzeitig Furchen bildet, durch die Wasser zur Bewässerung des Feldes fließen kann, ist vorgesehen, daß zunächst der Boden zu Furchen und Dämmen geformt wird, daß anschließend die Dämme und/oder die Furchen angedrückt und/oder verfestigt werden, und daß in die Dammkrone der Dämme das Saatgut (6) mittels der Säschare abgelegt wird.

FIG.1

EP 0 330 919 A1

Xerox Copy Centre

## Verfahren zum Einbringen von Saatgut in den Boden mittels Säschare

Die Erfindung betrifft ein Verfahren zum Einbringen von Saatgut in den Boden mittels Säschare, die das Saatgut im Boden ablegen.

Derartige Verfahren zum Einbringen von Saatgut in den Boden werden von mit Säscharen ausgerüsteten Drillmaschinen durchgeführt. Hierbei werden die Saatgüter in ein aufbereitetes Saatbett von den nebeneinander angeordneten Säscharen abgelegt.

Dieses Verfahren eignet sich jedoch nicht zur Saatgutausbringung in Tockenanbaugebieten, da es in diesen Gebieten unumgänglich ist, die besäten Felder zu bewässern, um überhaupt einigermaßen akzeptable Erträge erwirtschaften zu können. Die derzeitige Getreidebestellung erfolgt in diesen Trockenanbaugebieten in der Weise, daß zunächst die zu besäende Ackerfläche eingeebnet werden muß und dann in einem ersten Arbeitsgang das Saatgut breitflächig mittels eines bekannten Zentrifugaldüngerstreuers über die zu besäende Ackerfläche verteilt und anschließend in einem zweiten Arbeitsgang mittels eines Häufelpfluges Dämme und Furchen erzeugt werden, wobei das Saatgut während des Häufelvorganges mit Boden bedeckt wird. Auf den so erzeugten Dämmen wächst dann später das Getreide, während in die Furchen in gewissen Zeitabständen Wasser zur Bewässerung der Ackerfläche eingeleitet wird.

Diese Methode der Getreidebestellung ist sehr unbefriedigend, da die Ablagetiefe des Saatgutes im Boden nicht kontrolliert und beeinflußt werden kann, was zu einem unregelmäßigen Auflaufen des Getreides führt. Des weiteren wird sehr viel Saatgut vergeudet, da das, bedingt durch das Herstellen von Dämmen und Furchen, in großer Ablagetiefe im Boden sich befindliche Saatgut überhaupt nicht aufläuft, da nur das Saatgut aufläuft, das sich zufällig im oberen Bereich eines jeden Dammes befindet.

Der Erfindung liegt nun die Aufgabe zugrunde, ein Verfahren und eine zur Druchführung des Verfahrens geeignete Drillmaschine zu schaffen, welche in geeigneter Weise in Trockengebieten Dämme formen kann, in welche dann das Saatgut abgelegt wird und Furchen bildet, durch die Wasser zur Bewässerung des Feldes fließen kann.

Diese Aufgabe wird in erfindungsgemäßer Weise dadurch gelöst, daß zunächst der Boden zu Furchen und Dämmen geformt wird, daß anschließend die Dämme und/oder die Furchen angedrückt und/oder verfestigt werden, und daß in die Dammkrone der Dämme das Saatgut mittels der Säschare abgelegt wird.

Infolge dieser Maßnahmen wird ein Verfahren geschaffen, mit dem sich in einem Arbeitsgang die in Trockenanbaugebieten notwendigen Vorkehrungen zur erfolgversprechenden Ernte des ausgesäten Saatgutes durchführen lassen.

Bei der Ausführungsform ist in erfindungsgemäßer Weise vorgesehen, daß das Saatgut in der jeweils verfestigten Dammkrone der Dämme abgelegt wird. Hierdurch wird das Saatgut in einen verfestigten Bereich abgelegt und findet somit optimale Wachstumsbedingungen vor.

Damit die jeweilige Dammkrone der verfestigten Dämme und die Furchen während der Saatgutablage nicht wieder durch von der Dammkrone herrunterrollende Bodenteile zerstört werden, ist erfindungsgemäß vorgesehen, daß während der Saatgutablage die Dammkrone über Festhalteelemente in ihrer verfestigten Form gehalten und die von den Säscharen erzeugten Säfurchen wieder geschlossen werden.

Die Durchführung dieses Verfahrens erfolgt in bevorzugter Weise mittels einer mit wenigen Handgriffen umzurüstenden konventionellen Drillmaschine. Hierbei ist in erfindungsgemäßer Weise vorgesehen, daß die Drillmaschine Säschare zum Einbringen des Saatgutes in den Boden aufweist, daß vor den Säscharen Häufelkörper zur Vorformung von Dämmen und Dammformer und/oder Dammverfestiger angeordnet sind, welche den Furchengrund und/oder die Dämme verfestigen und das die Säschare im Bereich der Dämme angeordnet sind. Es ist also nicht notwendig, eine komplette, spezielle Drillmaschine für das Verfahren der Saatgutausbringung in Trockenanbaugebieten zu entwickeln, da sich die zur Durchführung dieses Verfahrens notwendigen Bauteile auf einfachste Weise an die konventionelle Drillmaschine anbringen lassen. Durch Auswechseln der Säschare läßt sich diese Drillmaschine für den Einsatz in Trockengebieten in einfachste Weise wieder in eine konventionelle Drillmaschine umwandeln.

Bei der Umrüstung der Drillmaschine für das Ausbringen der Saatgüter in trockenen Anbaugebieten ist erfindungsgemäß vorgesehen, daß die Häufelkörper an einem separaten Rahmen vor der Drillmaschine angeordnet sind.

Zum Vorformen von Dämmen unterschiedlichen Querschnittes, je nach vorherrschenden Bodenverhältnissen, ist der Rahmen mit den Häufelkörpern gegenüber der Drillmaschine in der Höhe verstellbar, oder aber die Häufelkörper sind höhenverstellbar an dem Rahmen angeordnet, wobei die Häufelkörper Streichbleche aufweisen, welche verstellbar ausgebildet sind. Durch die Verstellbarkeit der Streichbleche wird die Damm- und Furchenbildung beeinflußt.

In einer Ausführungsform ist erfindungsgemäß vorgesehen, daß die Dammformer oder Verfestiger zum Verfestigen der Dämme oder des Furchengrundes als Rolle ausgebildet ist, wobei die Rolle ein dem Damm entsprechendes Profil oder aber ein der Furche und den Dammseitenwänden entsprechendes Profil aufweisen kann. Hierbei kann die Rolle aus mehreren Einzelrollen zusammengesetzt sein, wobei dann die Drehachsen der einzelnen Rollen im Winkel zueinander angeordnet sind.

In einer besonders bevorzugten Ausführungsform ist in erfindungsgemäßer Weise vorgesehen, daß die Dammformer und/oder Verfestiger zum Verfestigen des Dammes und/oder des Furchengrundes als Kufen ausgebildet sind und die Dammformer und Verfestiger eine U-förmige Form aufweisen und auf dem Furchengrund aufliegen. Die jeweiligen Vorformer können entweder konvex oder konkav ausgebildet sein.

Damit ein Zerstören der geformten und verfestigten Dämme bzw. Dammkronen bei der Saatgutablage mittels der Säschare verhindert wird, ist erfindungsgemäß vorgesehen, daß die Säschare in einen Druchbruch, der sich in der Kufe befindet, in den Dammformern und Verfestigern angeordnet sind.

Die Anordnung der Dammformer oder Verfestiger an der Drillmaschine läßt sich erfindungsgemäß derart ausgbilden, daß die Dammformer oder Verfestiger versetzt oder aber auf einer Linie angeordnet sind.

Weitere Einzelheiten der Erfindung sind der Beispielsbeschreibung und den Zeichnungen zu entnehmen. Hierbei zeigt

Fig. 1 die in erfindungsgemäßer Weise ausgerüstete Drillmaschine in Prinzipdarstellung und in der Seitenansicht,

Fig. 2 die schematische Darstellung der einzelnen Arbeitsschritte beim Erzeugen von Dämmen und Furchen,

Fig. 3 die Prinzipdarstellung der für die Aussaat von Getreide in Trockenanbaugebieten geeigneten Drillmaschine in der Draufsicht,

Fig. 4 die von der in erfindungsgemäßer Weise ausgerüsteten Drillmaschine erzeugten Dämme und Furchen,

Fig. 5 den als Kufen ausgebildeten Dammformer zum Verfestigen des Dammes, der eine U-förmige Form aufweist und auf dem Furchengrund aufliegt, mit den angeordneten Säscharen, in der Ansicht von hinten-oben,

Fig. 6 den Dammformer gemäß Fig. 5 in der Seitenansicht,

Fig. 7 die Prinzipdarstellung des eine U-förmige Form aufweisenden Dammformers und Verfestigers, der auf dem Furchengrund aufliegt,

Fig. 8 eine andere Ausführungsfrom des als Kufe ausgebildeten Dammformers, der nur den Damm formt und verfestigt,

Fig. 9 eine weitere Ausführungsform der Dammformer oder Verfestiger zum Verfestigen der Dämme oder des Furchengrundes, welche aus mehreren Einzelrollen besteht,

Fig. 10 einen als Profilrolle zur Dammerzeugung ausgebildeten Dammformer und

Fig. 11 eine Profilrolle, die ein der Furche und den Dammseitenwänden entsprechendes Profil aufweist.

Die Drillmaschine weist den Vorratsbehälter 1, den Rahmen 2, die Dreipunktkupplungselemente 3, die Laufräder 4, die Dammformer 5, in denen die Säschare 6 angeordnet sind, auf. Den Säscharen 6 wird das sich im Vorratsbehälter 1 befindliche Saatgut in genau einstellbaren Mengen mit Hilfe des regelbaren Antriebsgetriebes 7 über die Saatleitungsrohre 8 zugeführt. Vor der sich über die Laufräder 4 auf den Boden abstützenden Drillmaschine sind nebeneinander an dem separaten Rahmen 9 die Häufelkörper 10 angeordnet. Diese Häufelkörper 10 sind höhenverstellbar an dem Rahmen 9 befestigt und weisen die Streichbleche 10' auf. Der separate Rahmen 9 ist über die Kupplungselemente 11 in den Dreipunktkupplungselementen 3 der Drillmaschine angelenkt. Des weiteren weist der separate Rahmen 9 den Dreipunktanbaubock 12, mit dem die gesamte Maschine an den Dreipunktkraftheber eines Ackerschleppers 13 anbaubar ist, auf. Vor dem Rahmen 9 befinden sich die ebenfalls höhenverstellbaren Tiefenführungsrollen 14.

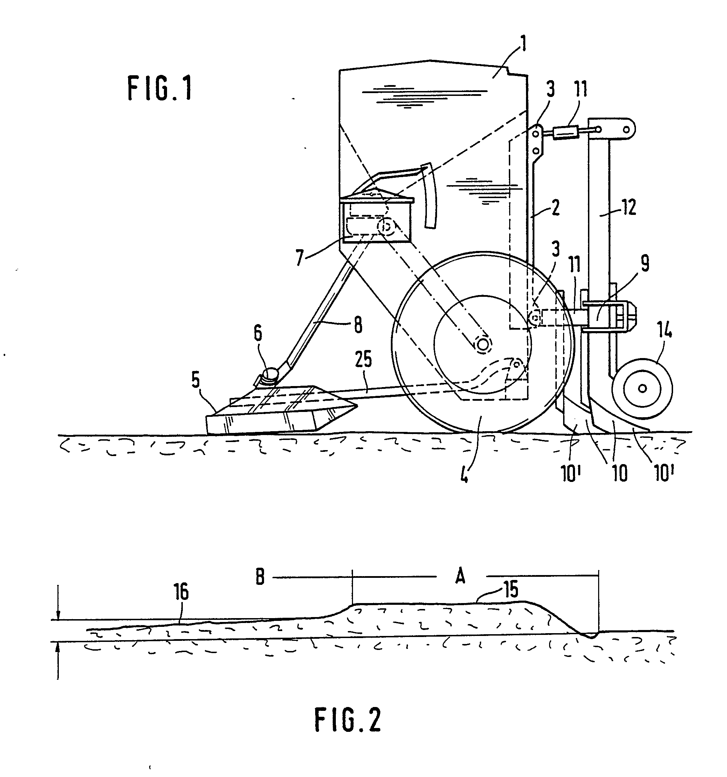

Die Fig. 2 zeigt die einzelnen Bereiche, bei der Herstellung der Dämme bzw. Furchen der einzelnen, an der Drillmaschine angeordneten Bauteile. Der Bereich A stellt den mittels der Häufelkörper 10 vorgeformten Damm 15 dar. Dann geht dieser Bereich des vorgeformten Dammes 15 in den Bereich B über, wobei der vorgeformte Damm 15 dann vom Dammformer 5 in seine endgültige Form gebracht und verfestigt wird, so daß die verfestigte Dammkrone 16 entsteht.

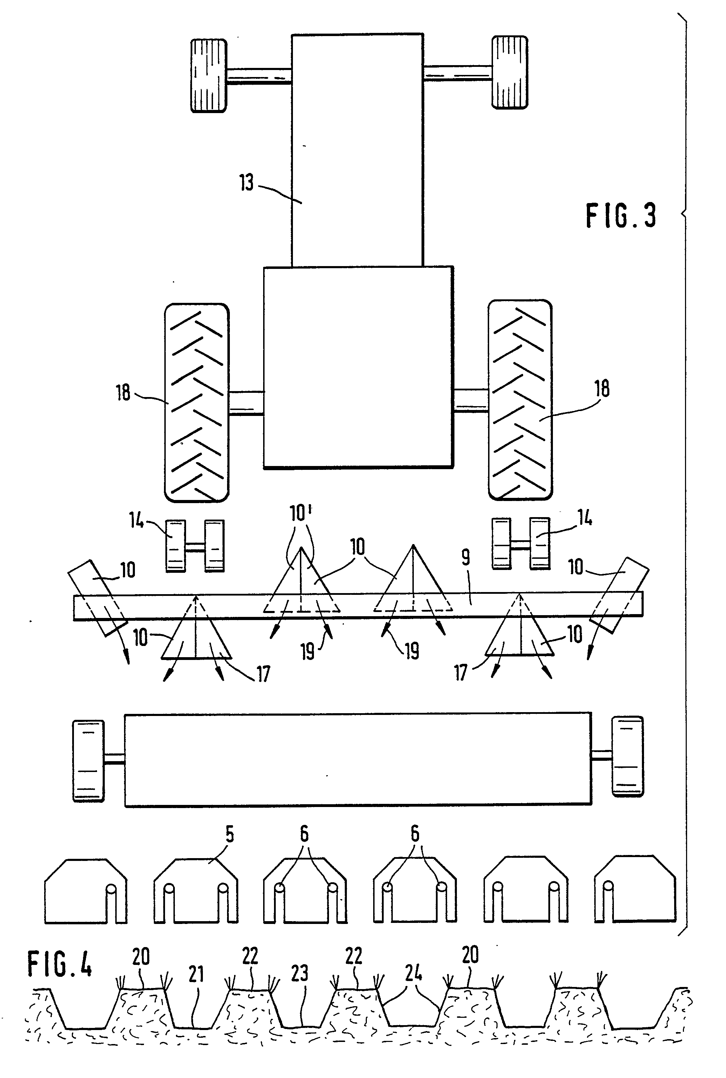

Die Fig. 3 zeigt in schematischer Darstellung und in der Draufsicht die Anordnung der erfindungsgemäßen Drillmaschine hinter dem Ackerschlepper 13, in der Draufsicht. Hierbei sind die am Rahmen 9, an dem sich die Häufelkörper 10 befinden, die Tiefenführungsrollen 14 derart angeordnet, daß sie in der Schlepperspur laufen, um nun eine möglichst kurze und kompakte Bauweise der Drillmaschine für den Einsatz in Trockenanbaugebieten zu erreichen, sind die beiden unmittelbar in der Schlepperspur angeordneten Häufelkörper 17 etwas nach hinten versetzt, um Platz für die unmittelbar hinter den Schlepperrädern 18 angeordneten Tiefenführungsrollen 14 zu schaffen. Die Häufelkörper 10 sind derart ausgebildet, daß sie den Boden in die jeweilige Pfeilrichtung 19 transportieren, so daß es zu einer Vorformung der Dämme 20 und Furchen 21 kommt. Diese vorgeformten Dämme und Furchen werden von den jeweils hinter der Drillmaschine angeordneten Dammformern 5, die auf gleicher Höhe nebeneinander angeordnet sind, verfestigt, so daß sich das in Fig. 4 wiedergegebene Profil der Ackerfläche ergibt. Die jeweiligen Dammformer 5 sind derart angeordnet, daß sie mit den vorlaufenden Häufelkörpern 10 jeweils fluchten. Mittels der in den Dammformern 5 angeordneten Säscharen 6 wird das Saatgut in der jeweiligen Dammkrone 22 der Dämme 20 abgelegt. Die Dammformer 5 sind derart ausgebildet, daß sie den Furchengrund 23 sowie die Dammseitenwände 24 verfestigen. Die Furchen 21 werden in den Trockenanbaugebieten dazu benutzt, um die Ackerflächen zu bewässern, indem diese Furchen von Zeit zu Zeit von Wasser durchflossen werden. Die Anordnung der Häufelkörper 17 direkt in den Schlepperspuren der Schlepperräder 18 ist extra so gewählt worden, damit ein Nachformen nach Auflaufen des Saatgutes erfolgen kann, wobei die Schlepperräder dann jeweils in den entsprechenden Furchen 21 laufen und die Dämme 20 nicht verstärkt werden.

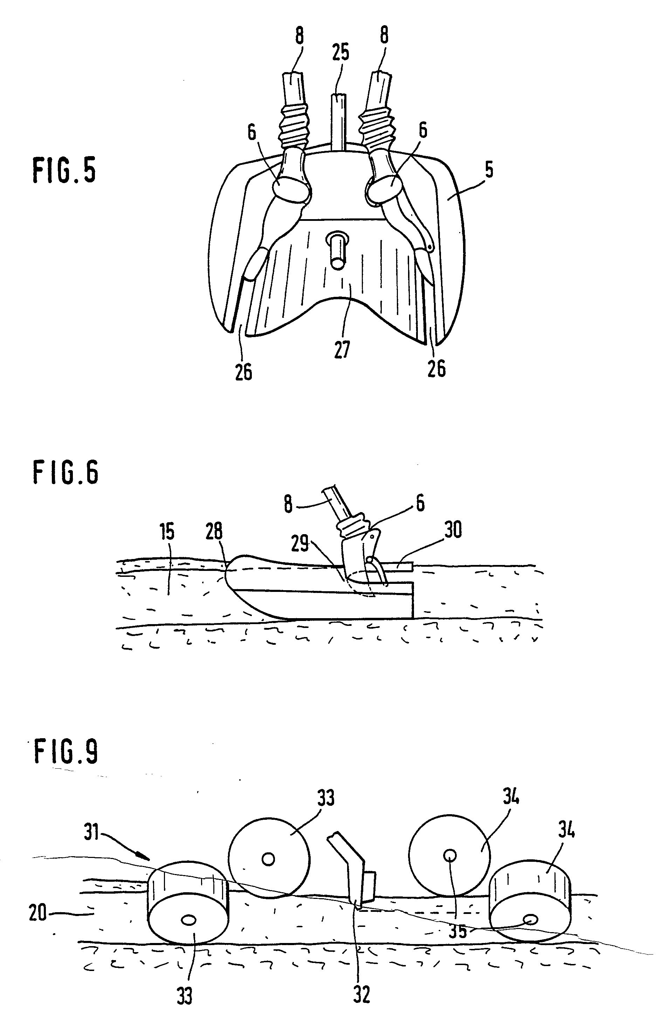

Die Fig. 5 zeigt einen Dammformer 5, der über die Halterung 25 mit dem Rahmen der Drillmaschine verbunden ist. Dieser Dammformer 5 dient zum Verfestigen der seitlichen Dammwände 24 und des Furchengrundes 23 der Furchen 21 und ist als Kufe ausgebildet. Das den Säscharen 6 zugeführte Saatgut wird im Bereich der Dammseitenwände 24 der Dammkrone 22 abgelegt. Die Säschare 6 sind jeweils in dem Durchbruch 26, der sich in der Kufe 27 befindet, in dem Dammformer 5 angeordnet. Dieser Dammformer 5 weist eine U-förmige Form auf und liegt auf dem Furchengrund 23 der Furche 21 auf. Die als Dammformer 5 ausgebildete Kufe 27 weist den Verfestigungsbereich 28, den Bereich 29, in dem die Säschare 6 angeordnet sind und den Dammfesthalter 30 auf. Der von den jeweiligen Häufelkörpern 10 vorgeformte Damm 15 wird mittels des Dammformers 5 oder Verfestigers verfestigt, wobei der Dammfesthalter 30 dazu dient, die Dammkrone 16 während der Saatgutablage mittels der Säschare 6 in ihrer verfestigten Form zu halten und die von den Säscharen 6 erzeugten Säfurchen wieder zu schließen.

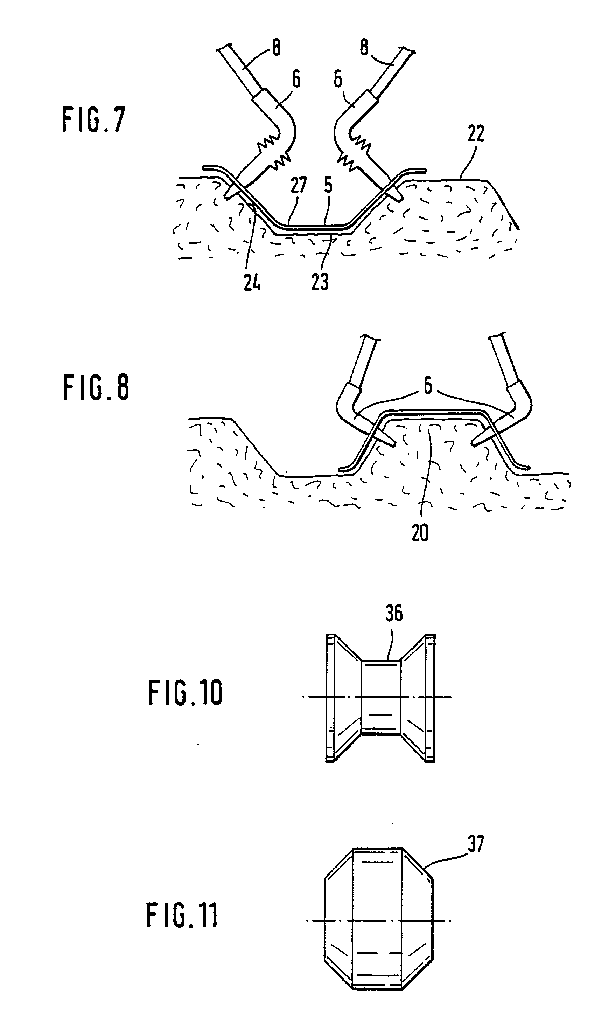

Die Fig. 7 zeigt die als Dammformer 5 ausgebildete Kufe 27, die konvex ausgebildet ist und auf den Furchengrund 23 aufliegt. Hierbei sind die Säschare 6 auch derart angeordnet, daß das Saatgut in die seitlichen Dammwände 24 im Bereich der Dammkrone 22 abgelegt wird.

Die Fig. 8 zeigt einen Dammformer 5 in konkaver Gestaltung, der den Damm 20 umschließt.

Die Fig. 9 zeigt einen andersartig ausgebildeten Dammformer 31, der aus den vor dem Säschar 32 angeordneten Rollen 33 und den hinter dem Säschar 32 angeordneten Rollen 34 besteht. Hierbei übernehmen die Rollen 33 die Verfestigung der von den Häufelkörpern 10 vorgeformten Dämme 20. In diese verfestigten Dämme wird dann mittels des Säschares 32 das Saatgut abgelegt, wobei nach Ablage des Saatgutes noch einmal eine Verfestigung des Dammes mittels der Rollen 34 erfolgt. Die jeweiligen Drehachsen 35 der Rollen 33 und 34 sind hierbei derart winkelversetzt, daß die eine Rolle für die Verfestigung der Dammkrone und die andere Rolle für die Verfestigung der Dammseitenwände zuständig ist.

Die Fig. 10 zeigt die Rolle 36, die als Dammformer ausgebildet ist und ein dem zu erzeugenden Damm entsprechendes Profil aufweist.

Die Fig. 11 zeigt die Rolle 37, die ein der Furche und Dammseitenwänden entsprechendes Profil aufweist.

## Ansprüche

1. Verfahren zum Einbringen von Saatgut in Dämme mit Säscharen, die das Saatgut im Boden ablegen, dadurch gekennzeichnet, daß zunächst der Boden zu Furchen (21) und Dämmen (20) geformt wird, daß anschließend die Dämme (20) und/oder die Furchen (21) angedrückt und/oder verfestigt werden, und daß in die Dammkrone (16,22) der Dämme (20) das Saatgut (6,32) mittels der Säschare abgelegt wird.

2. Verfahren nach Anspruch 1, dadurch gekennzeichnet, daß das Saatgut in der jeweils verfestigten Dammkrone (16,22) der Dämme (20) abgelegt wird.

3. Verfahren nach Anspruch 1 und/oder 2, dadurch gekennzeichnet, daß während der Saatgutablage die Dammkrone (16,22) über Festhalteelemente (30) in ihrer verfestigten Form gehalten und die von den Säscharen (6,32) erzeugten Säfurchen wieder geschlossen werden.

4. Drillmaschine zur Durchführung des Verfahrens nach einem oder mehrerer der vorstehenden Verfahrensansprüche 1 bis 3, dadurch gekennzeichnet, daß die Drillmaschine Säschare (6,32) zum Einbringen des Saatgutes in den Boden aufweist, daß vor den Säscharen (6,32) Häufelkörper (10) zur Vorformung von Dämmen (20) und Furchen angeordnet sind, daß hinter den Häufelkörpern Dammformer (5) und/oder Dammverfestiger angeordnet sind, welche den Furchengrund (23) und/oder die Dämme (20) verfestigen und das die Säschare (6,32) im Bereich der Dämme (20) angeordnet sind.

5. Drillmaschine nach Anspruch 4, dadurch gekennzeichnet, daß die Häufelkörper (10) an einem separaten Rahmen (9) vor der Drillmaschine angeordnet sind.

6. Drillmaschine nach Anspruch 5, dadurch gekennzeichnet, daß der Rahmen (9) mit den Häufelkörpern (10) gegenüber der Drillmaschine in der Höhe verstellbar angeordnet ist.

7. Drillmaschine nach Anspruch 5 oder 6, dadurch gekennzeichnet, daß die Häufelkörper (10) an dem Rahmen (9) höhenverstellbar angeordnet sind.

8. Drillmaschine nach den Ansprüchen 4 bis 7, dadurch gekennzeichnet, daß die Häufelkörper (10) Streichbleche aufweisen, welche verstellbar ausgebildet sind.

9. Drillmaschine nach den Ansprüchen 1, 3 und/oder 4, dadurch gekennzeichnet, daß die Dammformer (5) oder Verfestiger zum Verfestigen der Dämme (20) oder des Furchengrundes (23) als Rolle (36,37) ausgebildet ist.

10. Drillmaschine nach Anspruch 9, dadurch gekennzeichnet, daß die Rolle (36,37) ein dem Damm (20) entsprechendes Profil aufweist.

11. Drillmaschine nach Anspruch 9, dadurch gekennzeichnet, daß die Rolle (36,37) ein der Furche (21) und den Dammseitenwänden (24) entsprechendes Profil aufweist.

12. Drillmaschine nach Anspruch 9, dadurch gekennzeichnet, daß die Rolle aus mehreren Einzelrollen (33,34) zusammengesetzt ist.

13. Drillmaschine nach Anspruch 12, dadurch gekennzeichnet, daß die Drehachsen (35) der einzelnen Rollen (33,34) im Winkel zueinander angeordnet sind.

14. Drillmaschine nach Anspruch 1 und/oder 4, dadurch gekennzeichnet, daß die Dammformer (5) und/oder Verfestiger zum Verfestigen des Dammes (20) und/oder des Furchengrundes (23) als Kufen (27) ausgebildet sind.

15. Drillmaschine nach Anspruch 14, dadurch gekennzeichnet, daß die Dammformer (5) und Verfestiger eine U-förmige Form aufweisen und auf dem Furchengrund (23) aufliegen.

16. Drillmaschine nach Anspruch 1 und/oder 4, dadurch gekennzeichnet, daß die Furchenformer konvex oder konkav ausgebildet sind.

17. Drillmaschine nach den Ansprüchen 1 bis 4, dadurch gekennzeichnet, daß die Säschare (6,32) in einem Durchbruch (26), der sich in der Kufe (27) befindet, in den Dammformern (5) und Verfestigern angeordnet sind.

18. Drillmaschine nach den Ansprüchen 1 bis 4, dadurch gekennzeichnet, daß die Dammformer (5) oder Verfestiger versetzt zueinander angeordnet sind.

19. Drillmaschine nach den Ansprüchen 1 bis 4, dadurch gekennzeichnet, daß die Dammformer oder Verfestiger auf einer Linie angeordnet sind.

FIG.1

FIG.2

FIG.3

FIG.4

FIG.5

FIG.6

FIG.9

FIG.7

FIG.8

FIG.10

FIG.11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 103 405 (H. BUETTNER) <br> * vollständiges Dokument * <br> --- | 1-4,9 | A 01 C 5/06 |
| X | DE-C- 251 386 (E. PUSCH) <br> * vollständiges Dokument * <br> --- | 1-2 | |
| .X | FR-E- 78 779 (DOMAINE DU MAS DE VERT C.S. et al.) <br> * vollständiges Dokument * | 1-4,9-12,14,16,17 | |
| Y | --- | 5 | |
| X | US-A-3 456 607 (W.C. WEST) <br> * Ansprüche, Figuren; Spalte 6, Zeile 16 * | 1,2,6-8 | |
| Y | --- | 5 | |
| A | US-A-3 380 538 (H. GANTEAUME T.) <br> * Anspruch 1; Figuren * <br> ----- | 1 | |

|  |
|---|
| **RECHERCHIERTE SACHGEBIETE (Int. Cl.4)** |
| A 01 B 17/00 <br> A 01 B 49/00 <br> A 01 C 5/00 |

Der vorliegende Recherchenbericht wurde für alle Patentansprüche erstellt

| Recherchenort | Abschlußdatum der Recherche | Prüfer |
|---|---|---|
| BERLIN | 23-05-1989 | WUNDERLICH J E |